# EUROPÄISCHE PATENTSCHRIFT

(11) **EP 2 498 057 B1**
(45) Veröffentlichungstag und Bekanntmachung des Hinweises auf die Patenterteilung: **11.11.2015**
(21) Anmeldenummer: 11157665.8
(22) Anmeldetag: 10.03.2011
(51) Int. Cl.: G01C 21/32

(54) **Verfahren zum Aktualisieren der Landkartendaten einer Navigationseinrichtung und Navigationseinrichtung**
Method for updating the map data of a navigation device and navigation device
Procédé d'actualisation des données de cartes routières d'un dispositif de navigation et dispositif de navigation

(43) Veröffentlichungstag der Anmeldung: 12.09.2012
(73) Patentinhaber: TechniSat Digital GmbH, 54550 Daun (DE)
(72) Erfinder: Franz, Martin, 01097, Dresden (DE); Fischer, Peter, 01139, Dresden (DE); Nagel, Dieter, 01936, Königsbrück (DE)

(56) Entgegenhaltungen:
- WO-A1-2009/080069
- JP-A- 2004 125 510
- JP-A- 2006 275 777

## Beschreibung

Die Erfindung betrifft ein Verfahren zum Aktualisieren der Landkartendaten einer Navigationseinrichtung und eine Navigationseinrichtung.

Herkömmliche Navigationseinrichtungen sind als portable Geräte ausgeführt oder mit einem Fortbewegungsmittel, beispielsweise einem Kraftfahrzeug, einem Schiff oder einem Flugzeug, fest verbunden. Die Navigationseinrichtungen bestimmen auf der Grundlage von Landkartendaten eine optimale Streckenführung bzw. Route, welche von einer Startposition zu einer Zielposition führt.

Die Landkartendaten repräsentieren raumbezogene Objekte und diesen zugeordnete Informationen, beispielsweise Straßen, Wege, Plätze, Eisenbahnlinien, Flüsse, Gebäude, Brücken, Geländeformen, Landesgrenzen, Parkmöglichkeiten, Raststätten, Verkehrsregelungen, Geschwindigkeitsbegrenzungen und Ortschaften. Diese Objekte und Informationen können mithilfe eines Zeichensystems auf einem Bildschirm dargestellt werden, um die realen räumlichen Verhältnisse für einen Betrachter des Bildschirms verständlich zu machen. Die Landkartendaten sind in der Regel zusammen mit einer Navigationssoftware in einem nichtflüchtigen Speicher der Navigationseinrichtung abgelegt, beispielsweise in einem Flash-Speicher.

Die Startposition, welche normalerweise die Position eines Benutzers der Navigationseinrichtung zum Zeitpunkt einer Zieleingabe ist, wird meist unter Verwendung eines Navigationssatellitensystems bestimmt, beispielsweise unter Verwendung von GPS, GLONASS oder GALILEO. Dazu empfängt die Navigationseinrichtung mithilfe einer Satellitenantenne die Signale mehrerer geostationärer Satelliten und wertet diese Signale aus.

Üblicherweise muss die Navigationseinrichtung für eine genaue Positionsbestimmung die Signale von mindestens vier Satelliten gleichzeitig empfangen. Jedes der Signale enthält die Position des jeweiligen Satelliten und eine Zeitinformation. Aus diesen Daten errechnet die Navigationseinrichtung die vier Signallaufzeiten (von den Satelliten zur Satellitenantenne) und bestimmt darauf basierend ihre Position.

Die Zielposition wird in der Regel aus einem Ziel bestimmt, das der Benutzer der Navigationseinrichtung über eine Eingabeeinrichtung, beispielsweise eine Tastatur oder einen Berührungsbildschirm, oder mittels Sprache in die Navigationseinrichtung eingibt.

Die Bestimmung einer optimalen Route, welche von der Startposition zu der Zielposition führt, kann mittels einer Recheneinheit der Navigationseinrichtung ausgeführt werden, die einen Routenbestimmungsprozess abarbeitet.

Nach der Bestimmung der optimalen Route kann die Route oder ein Abschnitt der Route auf einem der Navigationseinrichtung zugeordneten Bildschirm dargestellt werden. Dadurch kann ein Benutzer der Navigationseinrichtung eine räumliche Vorstellung von der Route oder von einem vor ihm liegenden Routenabschnitt entwickeln, was ihm beispielsweise ermöglicht, Fahrmanöver vorausschauend zu planen.

Des Weiteren kann die Navigationseinrichtung über den Bildschirm oder über eine Lautsprecheranlage Fahranweisungen an den Benutzer ausgeben, welche auf der Grundlage einer aktuellen Position der Navigationseinrichtung und der von der Navigationseinrichtung bestimmten optimalen Route generiert werden.

Ferner kann die Navigationseinrichtung eine Neubestimmung einer zu einer Zielposition führenden optimalen Route vornehmen, wenn die Navigationseinrichtung eine ursprünglich bestimmte optimale Route verlassen hat.

Da die von den Landkartendaten einer Navigationseinrichtung repräsentierten Objekte und Informationen hinsichtlich ihrer Position, ihrer Ausdehnung und weiterer Eigenschaften veränderlich sind, entsprechen die Landkartendaten der Navigationseinrichtung nach einer gewissen Zeit nicht mehr den tatsächlichen Gegebenheiten. Mit anderen Worten sind die Landkartendaten der Navigationseinrichtung dann nicht mehr aktuell.

Das kann dazu führen, dass die von der Navigationseinrichtung ausgegebenen Routen oder Fahranweisungen fehlerhaft sind. So kann eine von der Navigationseinrichtung ausgegebene Route einen unpassierbaren Abschnitt aufweisen, beispielsweise aufgrund einer Baustelle. Weiterhin ist es möglich, dass eine von der Navigationseinrichtung ausgegebene Route nicht optimal ist, beispielsweise da eine neue Straße oder Brücke eine deutlich kürzere Route erlauben würde.

Um dies zu vermeiden, lassen sich die Landkartendaten einer Navigationseinrichtung aktualisieren, wobei ein sogenanntes Kartenupdate vorgenommen wird.

Befinden sich die zu aktualisierenden Landkartendaten auf einem transportablen Speichermedium der Navigationseinrichtung, wie einer CD, einer Speicherkarte oder einem USB-Stift, kann das Aktualisieren durch den Austausch des Speichermediums gegen ein anderes Speichermedium der gleichen Art mit neuen Landkartendaten erfolgen.

Sind die zu aktualisierenden Landkartendaten dagegen in einem fest in der Navigationseinrichtung eingebauten nichtflüchtigen Speicher abgelegt, beispielsweise in einem EEPROM oder einem Flash-Speicher, können diese Landkartendaten dadurch aktualisiert werden, dass neue Landkartendaten von einer externen Quelle, beispielsweise von einem PC oder von einem Laptop, über eine Datenverbindung auf den fest eingebauten nichtflüchtigen Speicher der Navigationseinrichtung übertragen werden. Hierfür ist beispielsweise eine USB-Verbindung oder eine WLAN-Verbindung nutzbar.

Ferner sind Navigationseinrichtungen bekannt, welche über einen integrierten Mobilfunkempfänger verfügen, beispielsweise über einen UMTS-Empfänger oder über einen GPRS-Empfänger. Mittels des Empfängers können ortsbezogene Daten während einer Fahrt empfangen und dann an einen Benutzer der Navigationseinrichtung ausgegeben werden, beispielsweise Straßennamen, Verkehrsdaten, Kraftstoffpreise, Parkinformationen oder Positionen von Geschwindigkeitsmesseinrichtungen.

Das Aktualisieren der Landkartendaten von Navigationseinrichtungen (Kartenupdate) ist meist sehr kostspielig und wird deshalb von vielen Benutzern der Navigationseinrichtungen nicht oder nur sporadisch vorgenommen. Deshalb verwenden viele Navigationseinrichtungen veraltete Landkartendaten, was zu dem Problem führt, dass die von den betreffenden Navigationseinrichtungen ausgegebenen Routen oder Fahranweisungen fehlerhaft sind. Ferner entgehen auf diese Weise den Anbietern der Landkartendaten Einnahmen, da weniger Landkartendaten verkauft werden.

Der hohe Kaufpreis für neue Landkartendaten ist zumindest teilweise darin begründet, dass die Landkartendaten in großen Paketen verkauft werden, die beispielsweise ein ganzes Land oder mehrere benachbarte Länder umfassen. Daher muss ein Benutzer zum Aktualisieren der Landkartendaten seiner Navigationseinrichtung Landkartendaten für ein großes Gebiet erwerben, auch wenn er nur Landkartendaten für ein kleineres Gebiet benötigt.

Die Bereitstellung der Landkartendaten in großen Paketen führt außerdem zu großen zeitlichen Abständen bei ihrer Bereitstellung, das heißt die Zeit zwischen der Bereitstellung einer Version von Landkartendaten und der Bereitstellung der folgenden Version der Landkartendaten ist lang. Das ist zumindest teilweise darin begründet, dass ein Anbieter zum Aktualisieren der Landkartendaten eines ganzen Landes oder mehrerer Länder viel mehr Zeit benötigt, als er zum Aktualisieren der Landkartendaten eines kleineren Gebiets benötigen würde.

Ein weiterer Nachteil der Bereitstellung der Landkartendaten in großen Paketen besteht darin, dass ein spontanes Aktualisieren der Landkartendaten einer Navigationseinrichtung unterwegs, beispielsweise während der Fahrt, über eine Mobilfunkverbindung, beispielsweise über eine UMTS-Verbindung oder eine GPRS-Verbindung, wegen des großen zu übertragenden Datenvolumens sehr zeitaufwendig wäre und daher nicht praktikabel ist.

Druckschrift WO 2009/080069 A1 beschreibt ein Verfahren zum Aktualisieren einer digitalen Landkarte, bei dem eine Präferenzinformation abgerufen wird, welche einen ersten Bereich der digitalen Landkarte definiert, für den eine Aktualisierungsinformation gewünscht wird. Ferner wird die Aktualisierungsinformation selektiv für den ersten Bereich empfangen und für die digitale Landkarte verwendet (vgl. Abstract).

Die Aufgabe der vorliegenden Erfindung kann darin gesehen werden, unter Verwendung aktueller Landkartendaten eine Route bereitzustellen, entlang derer ein Benutzer einer Navigationseinrichtung zu einer Zielposition geleitet werden kann, wobei die aktuellen Landkartendaten zu besonders niedrigen Kosten bezogen werden können.

Zur Lösung der Aufgabe wird das erfindungsgemäße Verfahren zum Aktualisieren der Landkartendaten einer Navigationseinrichtung bereitgestellt. Die Landkartendaten sind einem Gebiet zugeordnet und in einer nichtflüchtigen Speichereinheit der Navigationseinrichtung abgelegt.

Das erfindungsgemäße Verfahren weist folgende Schritte auf:
a) Bestimmen einer Zielposition (402),
b) Ermitteln einer Position (401) der Navigationseinrichtung,
c) Festlegen einer Region (403), in welcher die Position (401) angeordnet ist, sodass die Grundfläche der Region (403) kleiner als die Grundfläche des Gebiets (400) ist und die Zielposition (402) außerhalb der Region (403) angeordnet ist,
d) Aktualisieren derjenigen der Landkartendaten, welche der Region (403) zugeordnet sind, wobei diejenigen der Landkartendaten, welche der Region (403) nicht zugeordnet sind, nicht aktualisiert werden,
e) Berechnen einer Route (404), die von der Position (401) zu der Zielposition (402) führt, unter Verwendung der aktualisierten Landkartendaten der Region (403),
f) Ermitteln einer weiteren Position (408) der Navigationseinrichtung,
g) Festlegen einer weiteren Region (409), in welcher die weitere Position (408) angeordnet ist, sodass die Grundfläche der Region (409) kleiner als die Grundfläche des Gebiets (400) ist und die Zielposition (402) innerhalb der weiteren Region (409) angeordnet ist,
h) Aktualisieren derjenigen der Landkartendaten, welche der weiteren Region (409) zugeordnet sind, wobei diejenigen der Landkartendaten, welche der weiteren Region (409) nicht zugeordnet sind, nicht aktualisiert werden, und
i) Berechnen einer weiteren Route (410), die von der weiteren Position (408) zu der Zielposition (402) führt, unter Verwendung der aktualisierten Landkartendaten der weiteren Region (409).

Das erfindungsgemäße Verfahren bietet folgende Vorteile:
Da die Grundfläche der Region kleiner als die Grundfläche des Gebiets ist, wird nur ein Teil der Landkartendaten der Navigationseinrichtung aktualisiert, das heißt auf ein Aktualisieren sämtlicher Landkartendaten der Navigationseinrichtung wird verzichtet. Daher ist das zum Aktualisieren benötigte Datenvolumen vergleichsweise klein.

Beispielsweise beträgt das Datenvolumen der Landkartendaten des Gebiets 2 GB, während das Datenvolumen der Landkartendaten der Region nur 10 MB beträgt. Das kleine Datenvolumen der Landkartendaten der Region kann zu niedrigeren Kosten erzeugt werden als das große Datenvolumen der Landkartendaten des Gebiets. Das erlaubt einem Anbieter, die Landkartendaten der Region zu einem niedrigeren Preis anzubieten als die Landkartendaten des Gebiets.

Durch das Festlegen der Region, sodass die Position der Navigationseinrichtung in der Region angeordnet ist, werden nur die wirklich benötigten Landkartendaten aktualisiert, nämlich die der Umgebung der Navigationseinrichtung zugeordneten Landkartendaten. Der Benutzer der Navigationseinrichtung wird eher dazu bereit sein, diese wirklich benötigten Landkartendaten zu kaufen als Landkartendaten für ein ganzes Land oder mehrere Länder, die er möglicherweise zum Großteil gar nicht benötigt.

Das kleine Datenvolumen der zum Aktualisieren benötigten aktuellen Landkartendaten erlaubt einem Anbieter, aufeinanderfolgende Versionen neuer Landkartendaten in kurzen zeitlichen Abständen bereitzustellen. Insbesondere kann der Anbieter aktuelle Versionen von Landkartendaten besonders oft für solche Regionen bereitstellen, für die eine besonders große Nachfrage nach aktuellen Landkartendaten besteht. Derartige Regionen sind beispielsweise Regionen mit hohem Verkehrsaufkommen oder vielen Straßenbauaktivitäten. Mit anderen Worten kann ein Anbieter von Landkartendaten zwischen Regionen, deren Landkartendaten häufig aktualisiert werden, und Regionen, deren Landkartendaten selten aktualisiert werden, differenzieren und so seine Geschäftsaktivitäten an den lokalen Bedarf anpassen.

Weiterhin wird durch das erfindungsgemäße Verfahren ein spontanes Aktualisieren der Landkartendaten einer Navigationseinrichtung während der Fahrt über eine Mobilfunkverbindung möglich, da nur ein kleines Datenvolumen zu der Navigationseinrichtung übertragen werden muss, weshalb eine kurze Übertragungszeit oder eine geringe Übertragungs-Bandbreite ausreicht.

Weitere Ausführungsformen der Erfindung sind aus den abhängigen Patentansprüchen ersichtlich.

Gemäß der Erfindung wird ferner eine Navigationseinrichtung bereitgestellt, welche eine nichtflüchtige Speichereinheit aufweist, in der einem Gebiet zugeordnete Landkartendaten abgelegt sind. Die Navigationseinrichtung ist zum Ausführen des erfindungsgemäßen Verfahrens eingerichtet.

Die vorliegende Erfindung wird anhand von Ausführungsformen weiter erläutert. Dabei stellen die Figuren Folgendes dar:
Figur 1 zeigt eine Straßenkarte Deutschlands mit einer quadratförmigen Region, in der die Position einer Navigationseinrichtung angeordnet ist.
Figur 2 zeigt ein Gebiet mit mehreren quadratförmigen Regionen, in denen jeweils eine Position einer Navigationseinrichtung angeordnet ist.
Figur 3 zeigt ein Gebiet mit einer rechteckförmigen Region, in der eine Route angeordnet ist, die von der Position einer Navigationseinrichtung zu einer Zielposition verläuft.

Die Figuren 4a, 4b, 4c, 5a, 5b und 5c zeigen Gebiete, Positionen, Regionen und Routen gemäß Ausführungsformen der Erfindung.

Die Figuren 6 und 7 zeigen jeweils ein Ablaufdiagramm der Aktualisierung von Landkartendaten.

Die Figuren 8 und 9 zeigen jeweils ein Ablaufdiagramm des Überprüfens von Landkartendaten auf ihre Aktualität.

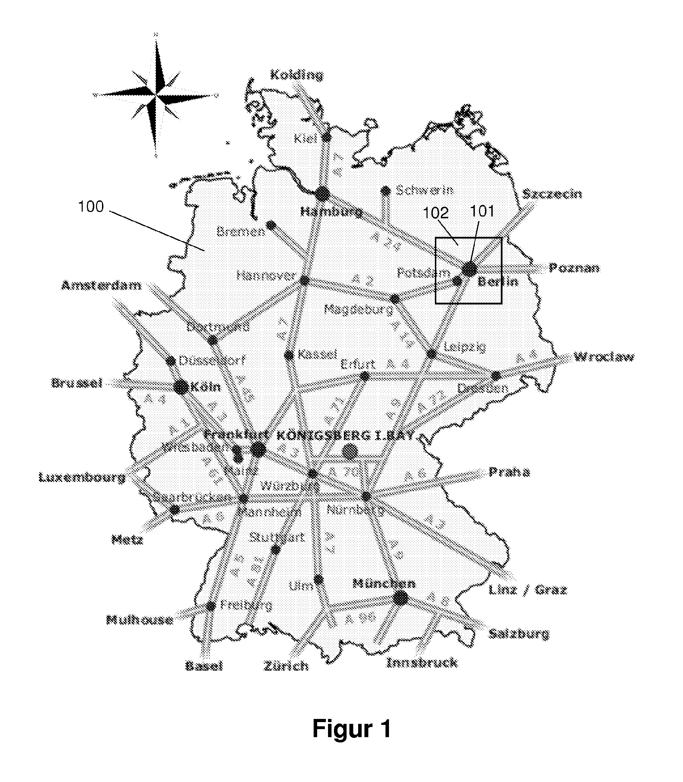

**Figur 1** zeigt eine Straßenkarte Deutschlands. Einem Gebiet 100, im vorliegenden Fall dem Territorium Deutschlands, sind Landkartendaten zugeordnet, die in einer nichtflüchtigen Speichereinheit einer Navigationseinrichtung abgelegt sind. Außerdem zeigt Figur 1 eine Position 101 der Navigationseinrichtung in Berlin.

Die genaue Position 101 wird von der Navigationseinrichtung unter Verwendung eines Satellitennavigationssystems ermittelt, beispielsweise unter Verwendung von GPS, GLONASS oder GALILEO.

Ferner zeigt Figur 1 eine in Nord-Süd-Richtung ausgerichtete quadratförmige Region 102, welche von der Navigationseinrichtung anhand der Position 101 festgelegt wird. Die Grundfläche der Region 102 ist kleiner als die Grundfläche des Gebiets 100.

Alternativ dazu kann die Region auch anders ausgerichtet sein, beispielsweise in Nordwest-Südost-Richtung. Außerdem kann die Region auch eine andere Form aufweisen, beispielsweise eine Trapezform, eine Kreisform, eine Ellipsenform oder eine Polygonform. Insbesondere kann die Region derart gestaltet und angeordnet sein, dass ihre Grenzen mit den Grenzen einer politisch-geografischen Verwaltungseinheit, beispielsweise eines Landkreises oder eines Bundeslandes, übereinstimmen.

Ferner kann die Region derart gestaltet und angeordnet sein, dass eine in einer Verkehrsmeldung mitgeteilte Position, beispielsweise die Position einer Verkehrsbehinderung, innerhalb der Region angeordnet ist. Der Vorteil dieser Option besteht darin, dass die Region möglicherweise zur Umgehung der Position geeignete Straßen aufweist. Die Verkehrsmeldung kann beispielsweise per TMC-Verkehrsfunk an die Navigationseinrichtung übertragen werden.

Weiterhin kann das Gebiet in mehrere Landkartenabschnitte unterteilt sein, beispielsweise in aneinander angrenzende Landkartenabschnitte, die jeweils eine rechteckige Grundfläche aufweisen. In diesem Fall kann die Region derart gestaltet sein, dass sie eine ganzzahlige Anzahl der Landkartenabschnitte aufweist. Beispielsweise umfasst die Region dann einen, zwei, drei oder vier Landkartenabschnitte.

Gemäß Figur 1 ist die Position 101 im Zentrum der Region 102 angeordnet, wobei das Zentrum der geometrische Mittelpunkt der Grundfläche der Region 102 ist.

Alternativ dazu kann die Position 101 auch an einer anderen Stelle der Region 102 angeordnet sein, beispielsweise in der Nähe einer Ecke der Region 102 oder in der Nähe einer Grenze der Region 102. Weiterhin können Form, Größe und Anordnung der Region 102 derart gewählt sein, dass die Region ein Straßennetz in einem bestimmten Umkreis, beispielsweise im Umkreis von 5 km, um die Position 101 herum abdeckt.

Ein Teil der Landkartendaten der Navigationseinrichtung sind der Region 102 zugeordnet und repräsentieren in der Region 102 angeordnete raumbezogene Objekte und diesen zugeordnete Informationen, beispielsweise Straßen, Wege, Plätze, Eisenbahnlinien, Flüsse, Gebäude, Brücken, Geländeformen, Landesgrenzen, Parkmöglichkeiten, Raststätten, Verkehrsregelungen, Geschwindigkeitsbegrenzungen und Ortschaften.

Es werden nur die der Region 102 zugeordneten Landkartendaten aktualisiert, wobei die anderen Landkartendaten der Navigationseinrichtung, nämlich die Landkartendaten des Teils des Gebiets 100, der sich außerhalb der Region 102 befindet, nicht aktualisiert werden.

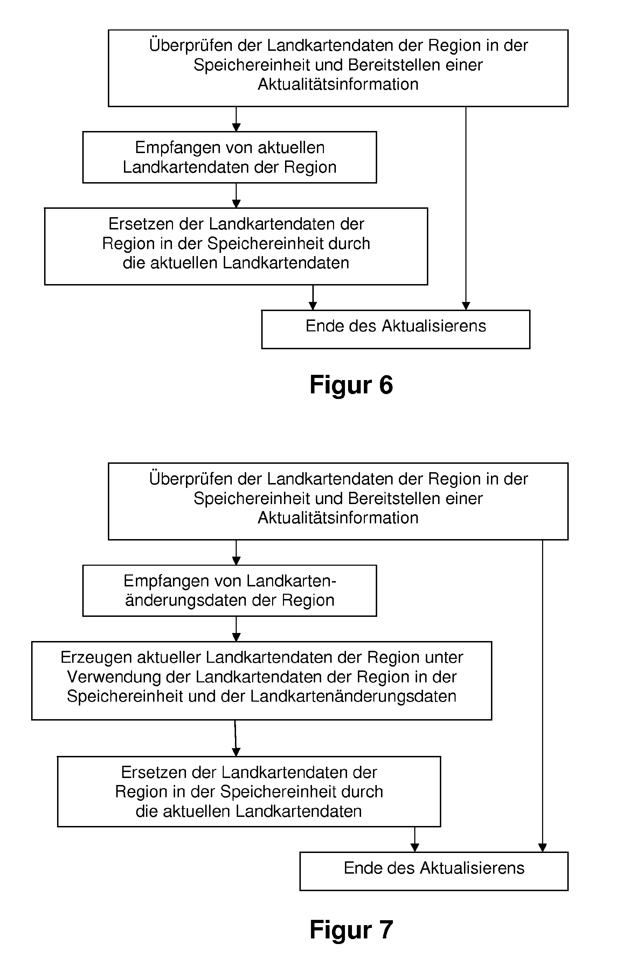

Der Ablauf des Aktualisierens der Landkartendaten der Region 102 ist in **Figur 6** dargestellt.

Demnach werden zunächst die der Region 102 zugeordneten Landkartendaten der Navigationseinrichtung auf ihre Aktualität überprüft, wobei eine Aktualitätsinformation bereitgestellt wird. Falls diese Landkartendaten gemäß der Aktualitätsinformation veraltet sind, also neuere Landkartendaten für die Region 102 vorliegen, empfängt die Navigationseinrichtung diese aktuellen Landkartendaten. Danach ersetzt die Navigationseinrichtung die in ihrer nichtflüchtigen Speichereinheit abgelegten veralteten Landkartendaten der Region 102 durch die empfangenen aktuellen Landkartendaten.

Falls dagegen die Landkartendaten der Navigationseinrichtung gemäß der Aktualitätsinformation aktuell sind, also keine neueren Landkartendaten für die Region 102 vorliegen, wird das Aktualisieren der Landkartendaten der Region 102 beendet (langer Pfeil in Figur 6).

Alternativ dazu, wie in **Figur 7** gezeigt ist, empfängt die Navigationseinrichtung anstelle der neuen Landkartendaten der Region 102 Landkartenänderungsdaten für die Region 102. Die Landkartenänderungsdaten weisen Änderungen der neuen Landkartendaten der Region 102 gegenüber den veralteten Landkartendaten der Region 102 auf. Daher ist das Datenvolumen der Landkartenänderungsdaten deutlich kleiner als das Datenvolumen der neuen Landkartendaten der Region 102.

Beispielsweise beträgt das Datenvolumen der aktuellen Landkartendaten der Region 10 MB, während das Datenvolumen der entsprechenden Landkartenänderungsdaten nur 1 MB beträgt.

Deshalb reicht für das Übertragen der Landkartenänderungsdaten zu der Navigationseinrichtung eine besonders kurze Übertragungszeit oder eine besonders kleine Übertragungs-Bandbreite aus.

Danach erzeugt die Navigationseinrichtung unter Verwendung der Landkartendaten der nichtflüchtigen Speichereinheit, welche der Region zugeordnet sind, und der empfangenen Landkartenänderungsdaten aktuelle Landkartendaten der Region. Anschließend ersetzt die Navigationseinrichtung die in ihrer nichtflüchtigen Speichereinheit abgelegten veralteten Landkartendaten der Region 102 durch die erzeugten aktuellen Landkartendaten der Region 102.

Für den Empfang der aktuellen Landkartendaten oder der Landkartenänderungsdaten durch das Navigationsgerät werden diese von einem externen Server über eine terrestrische Mobilfunkverbindung an das Navigationsgerät gesendet. Alternativ kann dazu auch eine andere Verbindung, beispielweise eine Satellitenfunkverbindung oder eine WLAN-Verbindung, genutzt werden.

Möglicherweise muss die Navigationseinrichtung ein Anforderungssignal an den externen Server senden, bevor der Server die aktuellen Landkartendaten oder die Landkartenänderungsdaten für die Region 102 an die Navigationseinrichtung sendet und die Navigationseinrichtung diese Daten empfangen kann.

Optional dazu muss ein Benutzer der Navigationseinrichtung vor dem Senden des Anforderungssignals durch eine entsprechende Eingabe bestätigen, dass die Navigationseinrichtung die aktuellen Landkartendaten oder Landkartenänderungsdaten von dem externen Server anfordern darf. Diese Option ist vor allem dann vorteilhaft, wenn der Bezug der aktuellen Landkartendaten oder Landkartenänderungsdaten zu Zusatzkosten für den Benutzer der Navigationseinrichtung führt.

Für das oben genannte Überprüfen der Aktualität der Landkartendaten sind zeitlich aufeinanderfolgende Versionen der Landkartendaten mit fortlaufenden Versionsnummern gekennzeichnet. Die der Region 102 zugeordneten Landkartendaten der Navigationseinrichtung sind mit einer ersten Versionsnummer versehen, während die der Region 102 zugeordneten aktuellen Landkartendaten mit einer zweiten Versionsnummer versehen sind. Die erste Versionsnummer kann zusammen mit den Landkartendaten der Navigationseinrichtung, die der Region 102 zugeordnet sind, in der nichtflüchtigen Speichereinheit abgelegt sein, während die zweite Versionsnummer zusammen mit den aktuellen Landkartendaten der Region 102 auf einem externen Server abgelegt sein kann.

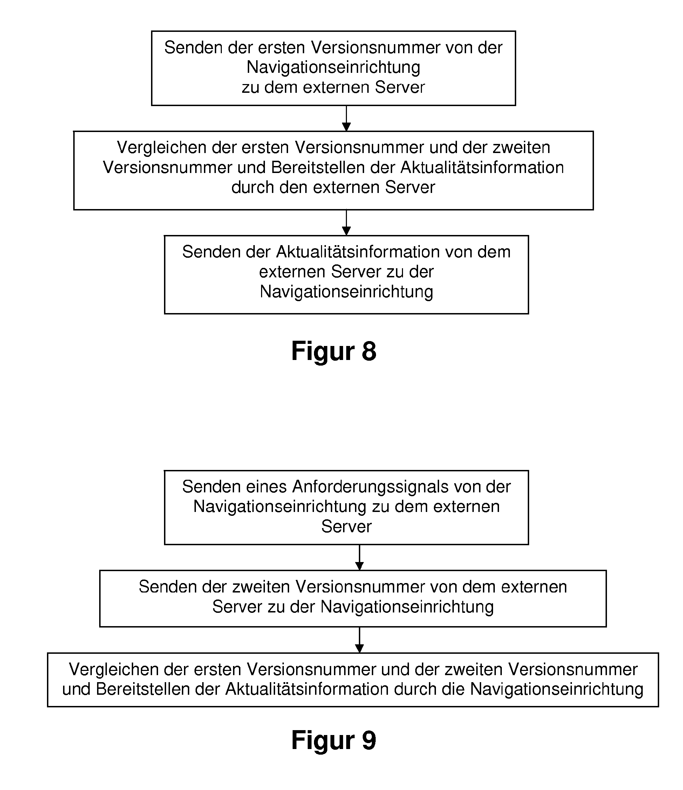

Bezugnehmend auf **Figur 8** läuft das Überprüfen der Aktualität der Landkartendaten der Region 102 folgendermaßen ab:
Zunächst sendet die Navigationseinrichtung die erste Versionsnummer an den externen Server. Danach vergleicht der externe Server die erste Versionsnummer mit der zweiten Versionsnummer. Sollten die beiden Versionsnummern nicht übereinstimmen, erzeugt der Server eine Aktualitätsinformation, dass die Landkartendaten der Navigationseinrichtung für die Region 102 veraltet sind. Andernfalls erzeugt der Server eine Aktualitätsinformation, dass die Landkartendaten der Navigationseinrichtung für die Region 102 noch aktuell sind.

Anschließend sendet der Server die Aktualitätsinformation an die Navigationseinrichtung.

Alternativ dazu kann das Überprüfen der Aktualität der Landkartendaten der Region 102 folgendermaßen ablaufen, wobei auf **Figur 9** Bezug genommen wird:
Zunächst sendet das Navigationsgerät ein Anforderungssignal an den externen Server, mit dem die zweite Versionsnummer, also die Versionsnummer der auf dem Server abgelegten Landkartendaten der Region 102, angefordert wird. Daraufhin sendet der externe Server die zweite Versionsnummer an die Navigationseinrichtung. Anschließend vergleicht die Navigationseinrichtung die erste Versionsnummer mit der zweiten Versionsnummer. Sollten die beiden Versionsnummern nicht übereinstimmen, stellt die Navigationseinrichtung eine Aktualitätsinformation bereit, dass die Landkartendaten der Navigationseinrichtung für die Region 102 veraltet sind. Andernfalls stellt die Navigationseinrichtung eine Aktualitätsinformation bereit, dass die Landkartendaten der Navigationseinrichtung für die Region 102 noch aktuell sind.

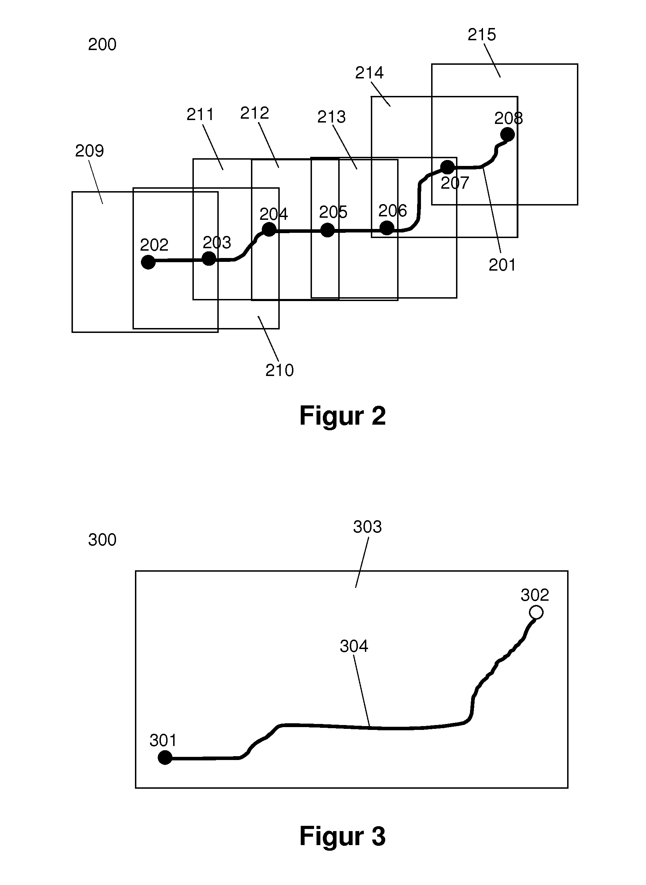

**Figur 2** zeigt ein Gebiet 200. In dem Gebiet 200 sind eine Fahrtroute 201 und mehrere Positionen 202 bis 208 einer Navigationseinrichtung entlang der Fahrtroute 201 angeordnet. Die Navigationseinrichtung weist Landkartendaten auf, welche dem Gebiet 200 zugeordnet sind.

Ferner zeigt Figur 2 mehrere in Nord-Süd-Richtung ausgerichtete quadratförmige Regionen 209 bis 215, welche sich gegenseitig überlappen und derart ausgebildet sind, dass jeweils eine der Positionen 202 bis 208 im Zentrum einer der Regionen 209 bis 215 angeordnet ist. Somit deckt jede der Regionen 209 bis 215 die Umgebung einer jeweiligen Position 202 bis 208 ab.

Wenn die Navigationseinrichtung sich an der Position 202 befindet, aktualisiert die Navigationseinrichtung ihre der Region 209 zugeordneten Landkartendaten. Sobald die Navigationseinrichtung die Position 203 erreicht hat, aktualisiert die Navigationseinrichtung ihre der Region 210 zugeordneten Landkartendaten. Erreicht die Navigationseinrichtung die Position 204, aktualisiert die Navigationseinrichtung ihre der Region 211 zugeordneten Landkartendaten, usw.

Auf diese Weise verfügt die Navigationseinrichtung auf der gesamten von ihr zurückgelegten Route 201 über aktuelle Landkartendaten ihrer Umgebung. Somit können einem Benutzer der Navigationseinrichtung mittels eines Bildschirms ständig aktuelle ortsbezogene Objekte und Informationen seiner Umgebung angezeigt werden.

Ein besonderer Vorteil besteht darin, dass die Regionen 209 bis 215 eine Art Korridor der von der Navigationseinrichtung zurückgelegten Route 201 bilden. Somit werden nur wirklich benötigte Landkartendaten, nämlich die Landkartendaten entlang der Route 201, aktualisiert, während auf das Aktualisieren anderer Landkartendaten verzichtet wird. Aufgrund dessen ist das zum Aktualisieren benötigte Datenvolumen besonders klein, wodurch ein entsprechendes Kartenupdate zu einem niedrigen Kaufpreis angeboten und über eine schmalbandige Funkverbindung zu der Navigationseinrichtung übertragen werden kann.

**Figur 3** zeigt ein Gebiet 300. In dem Gebiet 300 sind eine Position 301 einer Navigationseinrichtung und eine Zielposition 302 angeordnet. Die Navigationseinrichtung weist Landkartendaten für das Gebiet 300 auf.

Die Position 301 wird von der Navigationseinrichtung unter Verwendung einer GPS-Antenne ermittelt. Die Zielposition 302 wird von der Navigationseinrichtung aus einem Ziel bestimmt, welches ein Benutzer in die Navigationseinrichtung eingibt, beispielsweise mittels einer Tastatur, mittels eines Berührungsbildschirmes oder mittels Sprache.

Ferner ist eine von der Navigationseinrichtung festgelegte rechteckförmige Region 303 dargestellt, die derart ausgebildet ist, dass die Startposition 301 und die Zielposition 302 innerhalb der Region angeordnet sind, wobei sich beide Positionen jeweils in der Nähe einer Ecke der Region 303 befinden.

Die in Figur 3 gezeigte Gestaltung einer Region, sodass diese sowohl die Position der Navigationseinrichtung als auch die Zielposition umfasst, ist vor allem dann vorteilhaft, wenn die Zielposition von einem Benutzer in die Navigationseinrichtung eingegeben wurde, also nicht von der Navigationseinrichtung selbst geschätzt wurde (siehe die Beschreibung weiter unten), da dann eine besonders hohe Wahrscheinlichkeit dafür besteht, dass der Benutzer die Zielposition tatsächlich erreichen will.

Es werden nur diejenigen Landkartendaten des Gebiets 300 aktualisiert, welche der Region 303 zugeordnet sind, also unter anderem die Landkartendaten einer Umgebung der Position 301, einer Umgebung der Zielposition 302 und einer Umgebung einer gedachten geraden Verbindung zwischen der Position 301 und der Zielposition 302. Die anderen Landkartendaten des Gebiets 300 werden nicht aktualisiert. Unter Verwendung der aktualisierten Landkartendaten kann eine optimale Route 304 berechnet werden.

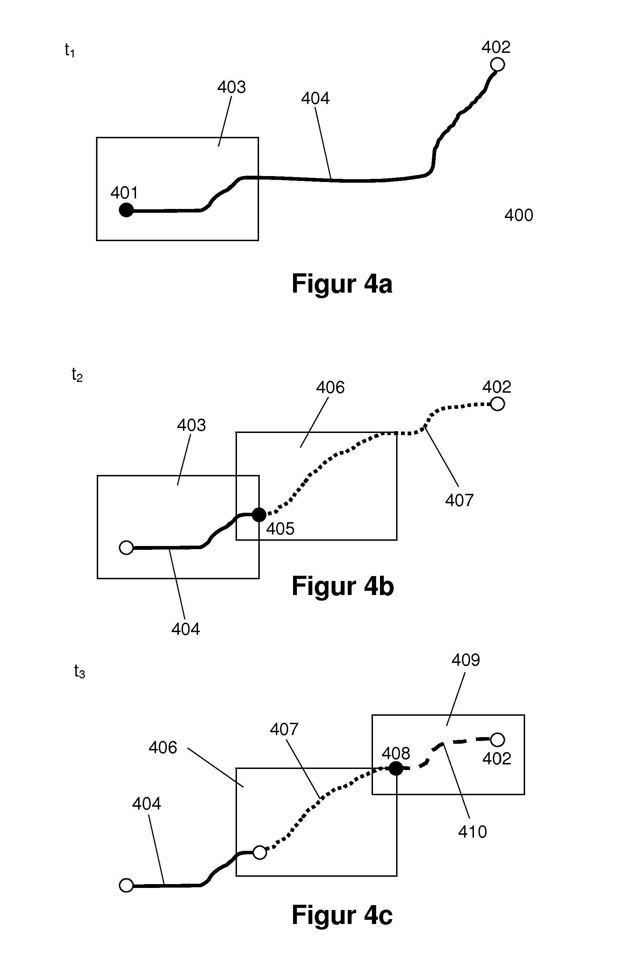

Die Figuren 4a bis 4c zeigen eine Ausführungsform der Erfindung.

**Figur 4a** zeigt eine Position 401 einer Navigationseinrichtung zu einem ersten Zeitpunkt t1 und eine Zielposition 402, die in einem Gebiet 400 angeordnet sind. Die Navigationseinrichtung weist dem Gebiet 400 zugeordnete Landkartendaten auf.

Die Position 401 wird von der Navigationseinrichtung unter Verwendung einer GPS-Antenne ermittelt. Da der Benutzer der Navigationseinrichtung im vorliegenden Fall keine Zieleingabe vornimmt, muss die Zielposition 402 von der Navigationseinrichtung selbst bestimmt werden, beispielsweise anhand der Position 401 und von Reisedaten, die in der Vergangenheit gewonnen wurden. Diese Art der Bestimmung einer Zielposition kann auch als Zielschätzung bezeichnet werden, da seitens der Navigationseinrichtung keine zuverlässige Information darüber vorliegt, welche Zielposition der Benutzer tatsächlich erreichen will.

Die Zielschätzung kann beispielsweise darauf basieren, dass der Benutzer der Navigationseinrichtung in der Vergangenheit schon einmal von der Position 401 aus zu der Zielposition 402 gefahren ist, womit eine gewisse Wahrscheinlichkeit dafür besteht, dass der sich an derselben Position 401 befindende Benutzer erneut dieselbe Zielposition 402 ansteuern wird.

Derartige Reisedaten können aber auch die Häufigkeiten aufweisen, mit der eine oder mehrere Zielpositionen in der Vergangenheit von einer Navigationseinrichtung erreicht wurden, oder die Zeitpunkte des letzten Erreichens einer oder mehrerer Zielpositionen durch die Navigationseinrichtung. Die Reisedaten werden beispielsweise aus Daten gewonnen, die in einer Zielspeicher-Einheit der Navigationseinrichtung abgelegt sind.

Ferner ist eine von der Navigationseinrichtung festgelegte Region 403 dargestellt, die derart ausgebildet ist, dass die Startposition 401 innerhalb der Region 403 angeordnet ist, während die Zielposition 402 außerhalb der Region 403 angeordnet ist. Diese Art der Gestaltung einer Region ist vor allem deshalb vorteilhaft, weil die Zielposition 402 von der Navigationseinrichtung nur geschätzt wurde und daher unsicher ist, ob der Benutzer der Navigationseinrichtung tatsächlich die Zielposition 402 erreichen will.

Des Weiteren ist die Region 403 derart ausgebildet, dass ein Abstand zwischen der Startposition 401 und der Grenze der Region 403 in Richtung der Zielposition 402 größer ist als ein Abstand zwischen der Position 401 und der Grenze der Region 403 in der entgegengesetzten Richtung. Mit anderen Worten ist die Region in Richtung der Zielposition 402 verschoben, das heißt das Zentrum der Region 403 befindet sich zwischen den Positionen 401 und 402. Damit ist die Region 403 derart ausgerichtet, dass sie einen möglichst großen Teil einer voraussichtlich von der Navigationseinrichtung zurückzulegenden Route umfasst. Das hat den Vorteil, dass die Anzahl der insgesamt benötigten Regionen besonders klein ist, wie im Folgenden deutlich wird.

Gemäß dem erfindungsgemäßen Verfahren werden die der Region 403 zugeordneten Landkartendaten der Navigationseinrichtung aktualisiert. Anschließend berechnet die Navigationseinrichtung auf der Basis ihrer Landkartendaten, der Position 401 und der Zielposition 402 eine optimale Route 404, welche die Position 401 mit der Zielposition 402 verbindet.

**Figur 4b** zeigt eine zweite Position 405 der Navigationseinrichtung zu einem zweiten Zeitpunkt t2.

Zu diesem Zeitpunkt t2 befindet sich die Navigationseinrichtung auf der Route 404 an der Grenze der Region 403. Die Navigationseinrichtung legt nun anhand der Position 405 und der Zielposition 402 eine zweite Region 406 fest, deren Landkartendaten anschließend aktualisiert werden. Alternativ können das Festlegen der Region 406 und das Aktualisieren der Landkartendaten der Region 406 schon zu einem früheren Zeitpunkt vorgenommen werden, beispielsweise zu einem Zeitpunkt, zu dem sich die Navigationseinrichtung zwischen der Startposition 401 und der Grenze der Region 403 befindet.

Die Region 406 ist, genau wie die Region 403, derart ausgebildet, dass die Zielposition 402 außerhalb der Region 406 angeordnet ist. Demgemäß wird auch jetzt noch eine Aktualisierung von Landkartendaten der Umgebung der Zielposition 402 vermieden, was vorteilhaft wäre, falls der Benutzer der Navigationseinrichtung doch eine andere Zielposition ansteuern sollte.

Gemäß Figur 4b überlappen sich die Regionen 403 und 406. Es ist jedoch auch möglich, dass sich beide Regionen nicht überlappen, sondern direkt aneinander angrenzen. Der Vorteil derart ausgebildeter Regionen besteht in ihrer kleineren Grundfläche, wodurch das zum Aktualisieren der zugehörigen Landkartendaten benötigte Datenvolumen kleiner ist.

Anschließend berechnet die Navigationseinrichtung auf der Basis ihrer Landkartendaten, der Position 405 und der Zielposition 402 eine optimale Route 407, welche die zweite Position 405 mit der Zielposition 402 verbindet. Im vorliegenden Fall unterscheidet sich der Verlauf der Route 407 vom Verlauf der vorher berechneten Route 404, da sich die zum Zeitpunkt t1 vorliegenden Landkartendaten der Navigationseinrichtung für die Region 406 und die aktualisierten Landkartendaten der Region 406 in einem für die Routenberechnung relevanten Maße unterscheiden, beispielsweise wegen einer erst seit kurzem bestehenden Baustelle auf der Route 404.

Gemäß einer besonders vorteilhaften Ausführungsform der Erfindung gibt die Navigationseinrichtung nun ein Warnsignal an ihren Benutzer aus. Da der Benutzer keine Zieleingabe vorgenommen hat, ist es nämlich wahrscheinlich, dass der Benutzer den Verlauf der Route 404 gut kennt, nicht aber den Verlauf der Route 407. Das Warnsignal soll den Benutzer darauf aufmerksam machen, dass sich die optimale Route geändert hat, also von der gut bekannten Route 404 abweicht. Der Benutzer kann so dazu veranlasst werden, den Fahranweisungen der Navigationseinrichtung ab sofort eine größere Beachtung zu schenken.

Das Warnsignal kann akustischer oder optischer Art sein. Beispielsweise kann das Warnsignal darin bestehen, dass ein bisher ausgeschalteter Bildschirm der Navigationseinrichtung plötzlich eingeschaltet wird. Ferner kann das Warnsignal auch darin bestehen, dass eine bisher ausgeschaltete Ausgabe von Fahranweisungen plötzlich eingeschaltet wird.

Wie in **Figur 4c** dargestellt, befindet sich die Navigationseinrichtung zu einem späteren Zeitpunkt t3 an einer Position 408 auf der Route 407 an der Grenze der Region 406. Die Navigationseinrichtung legt nun anhand ihrer Position 408 und der Zielposition 402 eine dritte Region 409 fest, deren Landkartendaten aktualisiert werden. Die Region 409 umfasst im Gegensatz zu den Regionen 403 und 406 auch die Zielposition 402.

Anschließend berechnet die Navigationseinrichtung auf der Basis ihrer Landkartendaten, der Position 408 und der Zielposition 402 eine optimale Route 410, welche die dritte Position 408 mit der Zielposition 402 verbindet. Im vorliegenden Fall ist der Verlauf der Route 410 mit dem Verlauf der vorher berechneten Route 407 identisch.

Gemäß den Figuren 4a bis 4c werden während der Fahrt eines Benutzers der Navigationseinrichtung entlang der Routen 404, 407 und 410 mehrmals vorausschauend die Landkartendaten einer vor dem Benutzer liegenden Region aktualisiert. Auf diese Weise verfügt die Navigationseinrichtung ständig über aktuelle Landkartendaten ihrer Umgebung und kann den Verlauf der optimalen Route schrittweise an die aktuellen Landkartendaten anpassen.

Ein besonderer Vorteil der Ausführungsform der Erfindung gemäß den Figuren 4a bis 4c besteht darin, dass keine Eingabe eines Ziels in die Navigationseinrichtung durch deren Benutzer erforderlich ist.

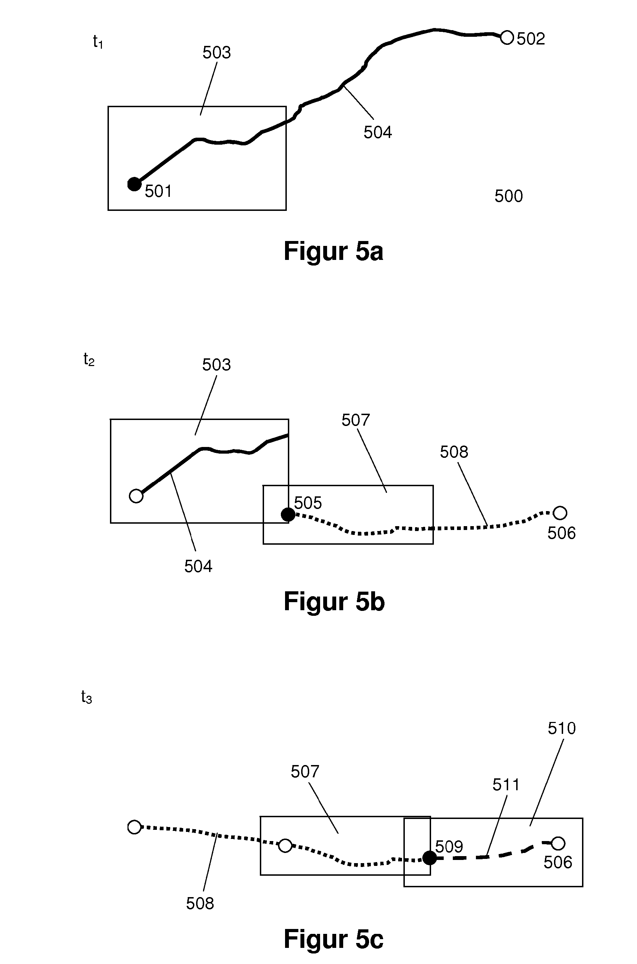

Die Figuren 5a bis 5c zeigen eine weitere Ausführungsform der Erfindung.

**Figur 5a** zeigt eine Position 501, an welcher sich eine Navigationseinrichtung zu einem ersten Zeitpunkt t1 befindet. Zusätzlich ist noch eine voraussichtliche Zielposition 502 gezeigt. Position 501 und Zielposition 502 sind in dem Gebiet 500 angeordnet. Die Navigationseinrichtung weist dem Gebiet 500 zugeordnete Landkartendaten auf.

Die Position 501 wird von der Navigationseinrichtung unter Verwendung einer GPS-Antenne ermittelt. Die voraussichtliche Zielposition 502 wird von der Navigationseinrichtung anhand der Position 501 und von in der Vergangenheit gewonnenen Reisedaten geschätzt, da der Benutzer der Navigationseinrichtung keine Eingabe eines Ziels vornimmt.

Ferner zeigt Figur 5a eine in Nord-Süd-Richtung ausgerichtete rechteckförmige Region 503, welche von der Navigationseinrichtung anhand der Position 501 und der Zielposition 502 festgelegt wird und derart ausgebildet ist, dass die Position 501 innerhalb der Region 503 angeordnet ist und die Zielposition 502 außerhalb der Region 503 angeordnet ist. Somit deckt die Region 503 eine Umgebung der Position 501 ab, aber keine Umgebung der voraussichtlichen Zielposition 502.

Gemäß der Erfindung werden die der Region 503 zugeordneten Landkartendaten der Navigationseinrichtung aktualisiert. Anschließend berechnet die Navigationseinrichtung anhand ihrer Landkartendaten, der Position 501 und der voraussichtlichen Zielposition 502 eine Route 504, welche von der Position 501 zu der voraussichtlichen Zielposition 502 führt.

**Figur 5b** zeigt eine von der Navigationseinrichtung mittels der GPS-Antenne ermittelte Position 505 der Navigationseinrichtung zu einem zweiten Zeitpunkt t2. Zu diesem Zeitpunkt befindet sich die Navigationseinrichtung an der Grenze der Region 503.

Das Besondere an der Position 505 ist, dass sich die Navigationseinrichtung nicht mehr auf der vorausberechneten Route 504 befindet. Mit anderen Worten ist der Benutzer der Navigationseinrichtung von der Route 504 abgewichen. Das kann darin begründet sein, dass der Benutzer der Navigationseinrichtung entgegen der Zielschätzung der Navigationseinrichtung nicht die Zielposition 502 ansteuern will, sondern eine andere Zielposition.

Wegen der Abweichung der Navigationseinrichtung von der vorausberechneten Route 504 und da der Benutzer der Navigationseinrichtung keine Zieleingabe vornimmt, legt die Navigationseinrichtung eine neue voraussichtliche Zielposition 506 fest, und zwar anhand der Position 505 und von Reisedaten, die in der Vergangenheit gewonnen wurden. Die neue voraussichtliche Zielposition 506 unterscheidet sich von der vorher bestimmten voraussichtlichen Zielposition 502. Mit anderen Worten verschiebt sich die voraussichtliche Zielposition von 502 nach 506.

Diese Änderung der Zielposition ist darin begründet, dass die Wahrscheinlichkeit, dass der Benutzer der Navigationseinrichtung von der Position 505 aus die Zielposition 506 ansteuert, höher als die Wahrscheinlichkeit ist, dass der Benutzer der Navigationseinrichtung von der Position 505 aus die Zielposition 502 ansteuert. Die genannten Wahrscheinlichkeiten werden auf der Grundlage der in der Vergangenheit gewonnenen Reisedaten ermittelt.

Ferner zeigt Figur 5b eine in Nord-Süd-Richtung ausgerichtete rechteckförmige Region 507, welche von der Navigationseinrichtung anhand der Position 505 und der neuen voraussichtlichen Zielposition 506 festgelegt wird und derart ausgebildet ist, dass die Position 505 innerhalb der Region 507 angeordnet ist, die Zielposition 506 aber außerhalb der Region 507 angeordnet ist.

Gemäß der Erfindung werden die der Region 507 zugeordneten Landkartendaten aktualisiert. Anschließend berechnet die Navigationseinrichtung anhand ihrer Landkartendaten, der Position 505 und der voraussichtlichen Zielposition 506 eine Route 508, welche von der Position 505 zu der neuen voraussichtlichen Zielposition 506 führt. Der Verlauf der Route 508 unterscheidet sich wegen der geänderten Zielposition vom Verlauf der vorher berechneten Route 504.

Wie in **Figur 5c** dargestellt ist, befindet sich die Navigationseinrichtung zu einem späteren Zeitpunkt t3 an einer Position 509 auf der Route 508 an der Grenze der Region 507.

Da sich die Navigationseinrichtung auf der vorausberechneten Route 508 befindet und der Benutzer der Navigationseinrichtung keine Zieleingabe vornimmt, wird die Zielposition 506 beibehalten.

Die Navigationseinrichtung legt nun anhand der Position 509 und der Zielposition 506 eine dritte Region 510 fest, deren Landkartendaten aktualisiert werden. Die Region 510 umfasst sowohl die Position 509 als auch die Zielposition 506, deckt also Umgebungen beider Positionen 509 und 506 ab.

Anschließend berechnet die Navigationseinrichtung auf der Basis ihrer Landkartendaten, der Position 509 und der Zielposition 506 eine optimale Route 511, welche die Position 509 mit der Zielposition 506 verbindet. Im vorliegenden Fall ist der Verlauf der Route 511 mit dem Verlauf der vorher berechneten Route 508 zwischen den Positionen 509 und 506 identisch.

Ein besonderer Vorteil der in den Figuren 5a bis 5c gezeigten Ausführungsform der Erfindung besteht darin, dass trotz fehlender Eingabe eines Ziels in die Navigationseinrichtung eine Zielführung durchgeführt wird und das voraussichtliche Ziel und die optimale Route an das tatsächliche Fahrverhalten des Benutzers der Navigationseinrichtung angepasst werden.

## Patentansprüche

1. Verfahren zum Betreiben einer Navigationseinrichtung, welche eine nichtflüchtige Speichereinheit aufweist, in der einem Gebiet (400) zugeordnete Landkartendaten abgelegt sind, mit den Schritten:
a) Bestimmen einer Zielposition (402),
b) Ermitteln einer Position (401) der Navigationseinrichtung,
c) Festlegen einer Region (403), in welcher die Position (401) angeordnet ist, sodass die Grundfläche der Region (403) kleiner als die Grundfläche des Gebiets (400) ist und die Zielposition (402) außerhalb der Region (403) angeordnet ist,
d) Aktualisieren derjenigen der Landkartendaten, welche der Region (403) zugeordnet sind, wobei diejenigen der Landkartendaten, welche der Region (403) nicht zugeordnet sind, nicht aktualisiert werden,
e) Berechnen einer Route (404), die von der Position (401) zu der Zielposition (402) führt, unter Verwendung der aktualisierten Landkartendaten der Region (403),
f) Ermitteln einer weiteren Position (408) der Navigationseinrichtung,
g) Festlegen einer weiteren Region (409), in welcher die weitere Position (408) angeordnet ist, sodass die Grundfläche der Region (409) kleiner als die Grundfläche des Gebiets (400) ist und die Zielposition (402) innerhalb der weiteren Region (409) angeordnet ist,
h) Aktualisieren derjenigen der Landkartendaten, welche der weiteren Region (409) zugeordnet sind, wobei diejenigen der Landkartendaten, welche der weiteren Region (409) nicht zugeordnet sind, nicht aktualisiert werden, und
i) Berechnen einer weiteren Route (410), die von der weiteren Position (408) zu der Zielposition (402) führt, unter Verwendung der aktualisierten Landkartendaten der weiteren Region (409).

2. Verfahren gemäß Anspruch 1,
bei dem die Zielposition (402) derart bestimmt wird, dass die Zielposition (402) geschätzt wird.

3. Verfahren gemäß einem der Ansprüche 1 oder 2,
bei dem eine der Regionen (403, 409) derart ausgebildet ist, dass ein Zentrum der Region (403, 409) zwischen der in der Region (403, 409) angeordneten Position (401) und der Zielposition (402) angeordnet ist.

4. Verfahren gemäß einem der vorhergehenden Ansprüche,
wobei das Aktualisieren der Landkartendaten, welche einer der Regionen (403,409) zugeordnet sind, aufweist:
Überprüfen der Landkartendaten, welche der Region (403, 409) zugeordnet sind, auf ihre Aktualität, sodass eine Aktualitätsinformation bereitgestellt wird,
und, in Abhängigkeit von der Aktualitätsinformation,
Empfangen von aktuellen Landkartendaten, welche der Region (403, 409) zugeordnet sind, und
Ersetzen der Landkartendaten der nichtflüchtigen Speichereinheit, welche der Region (403, 409) zugeordnet sind, durch die aktuellen Landkartendaten.

5. Verfahren gemäß einem der Ansprüche 1 bis 3,
wobei das Aktualisieren der Landkartendaten, welche einer der Regionen (403, 409) zugeordnet sind, aufweist:
Überprüfen der Landkartendaten, welche der Region (403, 409) zugeordnet sind, auf ihre Aktualität, sodass eine Aktualitätsinformation bereitgestellt wird,
und, in Abhängigkeit von der Aktualitätsinformation,
Empfangen von Landkartenänderungsdaten, welche der Region (403, 409) zugeordnet sind,
Erzeugen aktueller Landkartendaten, welche der Region (403, 409) zugeordnet sind, unter Verwendung der Landkartendaten der nichtflüchtigen Speichereinheit, welche der Region (403, 409) zugeordnet sind, und der Landkartenänderungsdaten,
Ersetzen der Landkartendaten der nichtflüchtigen Speichereinheit, welche der Region (403, 409) zugeordnet sind, durch die aktuellen Landkartendaten.

6. Verfahren gemäß einem der Ansprüche 4 und 5,
wobei die Landkartendaten der nichtflüchtigen Speichereinheit, welche der Region (403, 409) zugeordnet sind, deren Landkartendaten überprüft werden, eine erste Versionsnummer aufweisen und
die aktuellen Landkartendaten, welche der Region (403, 409) zugeordnet sind, eine zweite Versionsnummer aufweisen.

7. Verfahren gemäß Anspruch 6,
wobei das Überprüfen der Landkartendaten, welche der Region (403, 409) zugeordnet sind, deren Landkartendaten auf ihre Aktualität überprüft werden, aufweist:
Senden der ersten Versionsnummer von der Navigationseinrichtung zu einem externen Server,
Vergleichen der ersten Versionsnummer und der zweiten Versionsnummer, sodass die Aktualitätsinformation bereitgestellt wird, und
Senden der Aktualitätsinformation von dem externen Server zu der Navigationseinrichtung.

8. Verfahren gemäß Anspruch 6,
wobei das Überprüfen der Landkartendaten, welche der Region (403, 409) zugeordnet sind, deren Landkartendaten auf ihre Aktualität überprüft werden, aufweist:
Senden eines Anforderungssignals von der Navigationseinrichtung zu einem externen Server,
Senden der zweiten Versionsnummer von dem externen Server zu der Navigationseinrichtung und
Vergleichen der ersten Versionsnummer und der zweiten Versionsnummer, sodass die Aktualitätsinformation bereitgestellt wird.

9. Verfahren gemäß einem der vorhergehenden Ansprüche,
wobei die Navigationseinrichtung eine Verkehrsmeldung empfängt, welche eine Position aufweist, und
eine der Regionen (403, 409) derart ausgebildet ist, dass die Position der Verkehrsmeldung innerhalb der Region (403, 409) angeordnet ist.

10. Verfahren gemäß einem der vorhergehenden Ansprüche,
wobei eine der Regionen (403, 409)
• eine Quadratform,
• eine Rechteckform,
• eine Polygonform,
• eine Kreisform,
• eine Ellipsenform oder
• die Form einer Verwaltungseinheit
aufweist.

11. Verfahren gemäß einem der vorhergehenden Ansprüche,
bei dem die Schritte b) bis e) für eine andere Position (405) der Navigationseinrichtung erneut ausgeführt werden, sodass eine andere Region (406) festgelegt wird, bevor die Schritte f) bis i) ausgeführt werden.

12. Verfahren gemäß Anspruch 11,
bei dem, wenn sich der Verlauf der beim erneuten Ausführen von Schritt e) berechneten Route (407) vom Verlauf der beim vorherigen Ausführen von Schritt e) berechneten Route (404) unterscheidet, ein Warnsignal an einen Benutzer der Navigationseinrichtung ausgegeben wird.

13. Verfahren gemäß einem der Ansprüche 11 und 12,
bei dem die andere Position (405) an der Grenze der beim vorherigen Ausführen von Schritt c) festgelegten Region (403) angeordnet ist.

14. Verfahren gemäß einem der Ansprüche 11 bis 13,
bei dem, wenn die andere Position (505) nicht auf der beim vorherigen Ausführen des Schritts e) berechneten Route (504) angeordnet ist, vor dem erneuten Ausführen von Schritt c) die Zielposition (506) neu bestimmt wird.

15. Navigationseinrichtung, welche eine nichtflüchtige Speichereinheit aufweist, in der einem Gebiet (400) zugeordnete Landkartendaten abgelegt sind, wobei die Navigationseinrichtung zum Ausführen eines Verfahrens gemäß einem der vorhergehenden Ansprüche eingerichtet ist.

## Claims

1. Method for operating a navigation device which comprises a nonvolatile memory unit in which map data assigned to an area (400) are stored, the method comprising the steps of:
a) determining a target position (402),
b) identifying a position (401) of the navigation device,
c) defining a region (403) in which the position (401) is arranged so that the base area of the region (403) is smaller than the base area of the area (400) and the target position (402) is arranged outside the region (403),
d) updating those of the map data that are assigned to the region (403) whereby those of the map data that are not assigned to the region (403) are not updated,
e) calculating a route (404) that leads from the position (401) to the target position (402) by using the updated map data of the region (403),
f) identifying a further position (408) of the navigation device,
g) defining a further region (409) in which the further position (408) is arranged so that the base area of the region (409) is smaller than the base area of the area (400) and the target position (402) is arranged inside the further region (409),
h) updating those of the map data that are assigned to the further region (409) whereby those of the map data that are not assigned to the further region (409) are not updated, and
i) calculating a further route (410) that leads from the further position (408) to the target position (402) by using the updated map data of the further region (409).

2. Method according to claim 1
wherein the target position (402) is determined in such a way that the target position (402) is estimated.

3. Method according to one of the claims 1 and 2
wherein one of the regions (403, 409) is formed in such a way that a centre of the region (403, 409) is arranged between the position (401) arranged in the region (403, 409) and the target position (402).

4. Method according to one of the preceding claims
wherein the updating of the map data which are assigned to one of the regions (403, 409) comprises:
checking the map data which are assigned to the region (403, 409) for their currentness so that a currentness information is provided,
and, dependent on the currentness information,
receiving current map data assigned to the region (403, 409), and
replacing the map data of the nonvolatile memory unit assigned to the region (403, 409) by the current map data.

5. Method according to one of the claims 1 to 3
wherein the updating of the map data which are assigned to one of the regions (403, 409) comprises:
checking the map data which are assigned to the region (403, 409) for their currentness so that a currentness information is provided,
and, dependent on the currentness information,
receiving map amendment data which are assigned to the region (403, 409),
generating current map data which are assigned to the region (403, 409) by using the map data of the nonvolatile memory unit which are assigned to the region (403, 409) and the map amendment data,
replacing the map data of the nonvolatile memory unit which are assigned to the region (403, 409) by the current map data.

6. Method according to one of the claims 4 and 5
wherein the map data of the nonvolatile memory unit which are assigned to the region (403, 409) their map data are checked comprise a first version number and the current map data which are assigned to the region (403, 409) comprise a second version number.

7. Method according to claim 6
wherein the checking of the map data which are assigned to the region (403, 409) their map data are checked for their currentness comprises:
sending a first version number from the navigation device to an external server,
comparing the first version number and the second version number so that the currentness information is provided, and
sending the currentness information from the external server to the navigation device.

8. Method according to claim 6
wherein the checking of the map data which are assigned to the region (403, 409) their map data are checked for their currentness comprises:
sending a request signal from the navigation device to an external server,
sending the second version number from the external server to the navigation device, and
comparing the first version number and the second version number so that the currentness information is provided.

9. Method according to one of the preceding claims
wherein the navigation device receives a traffic message which comprises a position and one of the regions (403, 409) is formed in such a way that the position of the traffic message is arranged inside the region (403, 409).

10. Method according to one of the preceding claims
wherein one of the regions (403, 409) comprises
• a square shape,
• a rectangular shape,
• a polygon shape,
• a circular shape,
• an ellipsoid shape or
• the shape of an administrative unit.

11. Method according to one of the preceding claims
wherein, before the steps f) to i) are performed, the steps b) to e) are performed again for another position (405) of the navigation device so that another region (406) is defined.

12. Method according to claim 11
wherein, if the course of the route (407) calculated during performing step e) again differs from the course of the route (404) calculated during the preceding performance of step e), a warning signal is output to an user of the navigation device.

13. Method according to one of the claims 11 and 12
wherein the other position (405) is arranged at the border of the region (403) defined during the preceding performance of step c).

14. Method according to one of the claims 11 to 13
wherein, if the other position (505) is not arranged on the route (504) calculated during the preceding performance of step e), the target position (506) is again determined before step c) is performed again.

15. Navigation device comprising a nonvolatile memory unit in which map data assigned to an area (400) are stored, whereby the navigation device is designed for performing a method according to one of the preceding claims.

## Revendications

1. Procédure permettant d'utiliser un dispositif de navigation possédant une unité mémoire non volatile dans laquelle sont enregistrées des données cartographiques correspondant à une zone (400), la procédure étant composée des étapes suivantes :
a) détermination de la position de destination (402) ;
b) détermination de la position (401) du dispositif de navigation ;
c) définition d'une région (403) dans laquelle se situe la position (401), de sorte que la surface de la région (403) soit inférieure à la surface de la zone (400) et que la position de destination (402) se situe à l'extérieur de la région (403) ;
d) mise à jour des données cartographiques correspondant à la région (403), les données cartographiques ne correspondant pas à la région (403) n'étant pas mise à jour ;
e) calcul de l'itinéraire (404) menant de la position (401) à la position de destination (402), les données cartographiques mises à jour de la région (403) étant utilisées pour le calcul ;
f) détermination d'une nouvelle position (408) du dispositif de navigation ;
g) définition d'une nouvelle région (409) dans laquelle se situe la nouvelle position (408), de sorte que la surface de la région (409) soit inférieure à la surface de la zone (400) et que la position de destination (402) se situe à l'intérieur de la nouvelle région (409) ;
h) mise à jour des données cartographiques correspondant à la nouvelle région (409), les données cartographiques ne correspondant pas à la nouvelle région (409) n'étant pas mise à jour ;
i) calcul d'un nouvel itinéraire (410) menant de la nouvelle position (408) à la position de destination (402), les données cartographiques mises à jour de la nouvelle région (409) étant utilisées pour le calcul.

2. Procédure selon la revendication 1,
**caractérisée en ce que** la position de destination (402) est déterminée de telle sorte que la position de destination (402) est estimée.

3. Procédure selon l'une des revendications 1 et 2,
**caractérisée en ce que** l'une des régions (403, 409) est définie de telle sorte qu'un centre de la région (403, 409) est situé entre la position (401) située dans la région (403, 409) et la position de destination (402).

4. Procédure selon l'une des revendications précédentes,
**caractérisée en ce que** la mise à jour des données cartographiques correspondant à l'une des régions (403, 409) consiste :
à vérifier les données cartographiques correspondant à la région (403, 409) de manière à déterminer si elles sont actuelles et à pouvoir fournir une information indiquant si elles sont actuelles,
et, selon l'information indiquant si les données cartographiques sont actuelles,
à recevoir des données cartographiques actuelles pour la région (403, 409) et
à remplacer les données cartographiques de l'unité mémoire non volatile, qui correspondent à la région (403, 409), par les données cartographiques actuelles.

5. Procédure selon l'une des revendications 1 à 3,
**caractérisée en ce que** la mise à jour des données cartographiques correspondant à l'une des régions (403, 409) consiste :
à vérifier les données cartographiques correspondant à la région (403, 409) de manière à déterminer si elles sont actuelles et à pouvoir fournir une information indiquant si elles sont actuelles,
et, selon l'information indiquant si les données cartographiques sont actuelles,
à recevoir des données cartographiques correspondant à la région (403, 409),
à générer des données cartographiques actuelles correspondant à la région (403, 409), les données cartographiques de l'unité mémoire non volatile, qui correspondent à la région (403, 409), et les données cartographiques modifiées étant utilisées, et
à remplacer les données cartographiques de l'unité mémoire non volatile, qui correspondent à la région (403, 409), par les données cartographiques actuelles.

6. Procédure selon l'une des revendications 4 et 5,
**caractérisée en ce que** les données cartographiques de l'unité mémoire non volatile, qui correspondent à la région (403, 409) dont les données cartographiques sont vérifiées, possèdent un premier numéro de version et
que les données cartographiques actuelles correspondant à la région (403, 409) possèdent un deuxième numéro de version.

7. Procédure selon la revendication 6,
**caractérisée en ce que** la vérification des données cartographiques correspondant à la région (403, 409) dont les données cartographiques sont vérifiées de manière à déterminer si elles sont actuelles consiste :
à envoyer le premier numéro de version à un serveur externe depuis le dispositif de navigation,
à comparer le premier numéro de version et le deuxième numéro de version de manière à pouvoir fournir l'information indiquant si les données cartographiques sont actuelles et
à envoyer l'information indiquant si les données cartographiques sont actuelles au dispositif de navigation depuis le serveur externe.

8. Procédure selon la revendication 6,
**caractérisée en ce que** la vérification des données cartographiques correspondant à la région (403, 409) dont les données cartographiques sont vérifiées de manière à déterminer si elles sont actuelles consiste :
à envoyer un signal de requête à un serveur externe depuis le dispositif de navigation,
à envoyer le deuxième numéro de version au dispositif de navigation depuis le serveur externe et
à comparer le premier numéro de version et le deuxième numéro de version de manière à pouvoir fournir l'information indiquant si les données cartographiques sont actuelles.

9. Procédure selon l'une des revendications précédentes,
**caractérisée en ce que** le dispositif de navigation reçoit un message d'information trafic contenant une position et
que l'une des régions (403, 409) est définie de telle sorte que la position du message d'information trafic se situe à l'intérieur de la région (403, 409).

10. Procédure selon l'une des revendications précédentes,
**caractérisée en ce que** l'une des régions (403, 409) a la forme
• d'un carré,
• d'un rectangle,
• d'un polygone,
• d'un cercle,
• d'une ellipse ou
• d'une unité administrative.

11. Procédure selon l'une des revendications précédentes,
**caractérisée en ce que** les étapes b) à e) sont à nouveau exécutées pour une autre position (405) du dispositif de navigation, de manière à définir une autre région (406) avant l'exécution des étapes f) à i).

12. Procédure selon la revendication 11,
**caractérisée en ce que**, si le tracé de l'itinéraire (407) calculé lors de la nouvelle exécution de l'étape e) est différent du tracé de l'itinéraire (404) calculé lors de l'exécution précédente de l'étape e), une alarme est transmise à un utilisateur du dispositif de navigation.

13. Procédure selon l'une des revendications 11 et 12,
**caractérisée en ce que** l'autre position (405) se situe à la limite de la région (403) définie lors de l'exécution précédente de l'étape c).

14. Procédure selon l'une des revendications 11 à 13,
**caractérisée en ce que**, si l'autre position (505) ne se situe pas sur l'itinéraire (504) calculé lors de l'exécution précédente de l'étape e), la position de destination (506) est à nouveau déterminée avant la nouvelle exécution de l'étape c).

15. Dispositif de navigation possédant une unité mémoire non volatile dans laquelle sont enregistrées des données cartographiques correspondant à une zone (400), le dispositif de navigation étant configuré pour exécuter une procédure selon l'une des revendications précédentes.
